# EUROPÄISCHE PATENTSCHRIFT

(11) **EP 2 616 297 B1**
(45) Veröffentlichungstag und Bekanntmachung des Hinweises auf die Patenterteilung: **08.03.2017**
(21) Anmeldenummer: 11758455.7
(22) Anmeldetag: 15.09.2011
(51) Int. Cl.: B60T 13/68, B60T 8/17, G07C 5/00

(54) **VERFAHREN ZUM KONFIGURIEREN EINES ELEKTRONISCHEN STEUERGERÄTS EINES KRAFTFAHRZEUG-ANHÄNGERS**
METHOD FOR CONFIGURING AN ELECTRONIC CONTROL UNIT OF A MOTOR VEHICLE TRAILER
PROCÉDÉ SERVANT À CONFIGURER UN APPAREIL DE COMMANDE ÉLECTRONIQUE D'UNE REMORQUE DE VÉHICULE AUTOMOBILE

(30) Priorität: 17.09.2010 DE 102010040977
(43) Veröffentlichungstag der Anmeldung: 24.07.2013
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2011/066035
(87) Internationale Veröffentlichungsnummer: WO 2012/035114

(56) Entgegenhaltungen:
- EP-A2- 2 042 379
- DE-A1-102006 039 764
- DE-B3-102007 053 766
- GB-A- 2 363 435

## Beschreibung

Die Erfindung betrifft ein Verfahren zum Konfigurieren eines elektronischen Steuergeräts eines Kraftfahrzeug-Anhängers unter Verwendung von spezifischen Daten für die am Kraftfahrzeug-Anhänger verbauten oder zu verbauenden Fahrwerkssysteme und/oder Fahrwerkskomponenten. Die Erfindung betrifft ferner auch ein Fahrwerkssystem, eine Fahrwerkskomponente und einen Kraftfahrzeug-Anhänger.

Aus der DE 10 2007 053 766 B3 ist eine Steueranlage für einen Kraftfahrzeug-Anhänger mit Betriebsbremse, Feststellbremse und Luftfederung bekannt. Zu dieser Steueranlage gehört u. a. ein elektronisches Steuergerät (EBS-Steuergerät), welches die Betriebsbremse steuert.

GB 2 363 435 A offenbart ein Bremssystem für ein Fahrzeug, welches gespeicherte Fahrzeugdaten verwendet, um Bremskräfte elektronisch zu steuern.

EP 2 042 379 A2 betrifft ein Steuergerät zur Identifikation von Ersatzteilen für Teilsysteme eines Fahrzeugs mit einer durch eine Erfassungseinrichtung eingelesenen Information.

DE 10 2006 039 764 A1 offenbart einen Nutzfahrzeuganhänger mit einem elektronisch gesteuerten Bremssystem, wobei das elektronisch gesteuerte Bremssystem ein elektronisches Steuergerät aufweist, welches einen Parameterspeicher aufweist, der wenigstens einen Speicherbereich aufweist, in dem fahrzeugspezifische Daten speicherbar sind, wobei das elektronische Steuergerät das elektronisch gesteuerte Bremssystem unter Verwendung der fahrzeugspezifischen Daten steuert und wobei das elektronische Steuergerät eine Schnittstelle zu einem externen Rechner aufweist, wobei an dem Nutzfahrzeuganhänger wenigstens ein Informationsmittel angebracht ist, welches die fahrzeugspezifischen Daten charakterisiert.

Wird an einem Kraftfahrzeug-Anhänger ein Fahrwerksystem oder eine Fahrwerkskomponente verbaut oder ausgetauscht, muss ein am Kraftfahrzeug-Anhänger vorhandenes Steuergerät unter Verwendung spezifischer Daten für dieses Fahrwerkssystem und/oder für diese Fahrwerkskomponenten konfiguriert werden. Unter Konfigurieren wird das Einstellen und/oder Anpassen des Steuergeräts verstanden. Heutzutage wird die Eingabe der erforderlichen Daten in das Steuergerät üblicherweise manuell durch den Fahrzeugbauer oder die Werkstatt vorgenommen. Ferner ist bekannt, dass die Anbieter von Fahrwerkssystemen und/oder Fahrwerkskomponenten vorkonfigurierte Steuergeräte bereitstellen, wobei dann eine gezielte Zuordnung von Steuergerät und Fahrwerkssystem bzw. Fahrwerkskomponente erforderlich ist. Beides ist aufwändig und zudem fehleranfällig.

Eine Aufgabe der Erfindung ist es, eine Möglichkeit aufzuzeigen, wie das Konfigurieren eines elektronischen Steuergeräts eines Kraftfahrzeug-Anhängers vereinfacht werden kann.

Diese Aufgabe wird gelöst von einem Verfahren mit den Merkmalen des Anspruchs 1. Gemäß den nebengeordneten Ansprüchen erstreckt sich die Lösung der Aufgabe auch auf ein Fahrwerkssystem und eine Fahrwerkskomponente, sowie auf einen Kraftfahrzeug-Anhänger. Bevorzugte Weiterbildungen und Ausgestaltungen sind in den jeweils abhängigen Ansprüchen angegeben. Die nachfolgenden Erläuterungen gelten analog für alle Erfindungsgegenstände.

Das erfindungsgemäße Verfahren zum Konfigurieren eines elektronischen Steuergeräts eines Kraftfahrzeug-Anhängers unter Verwendung von spezifischen Daten für die am Kraftfahrzeug-Anhänger verbauten (oder zu verbauenden) Fahrwerkssysteme und/oder Fahrwerkskomponenten ist dadurch gekennzeichnet, dass wenigstens ein Fahrwerkssystem und/oder wenigstens eine Fahrwerkskomponente mit wenigstens einem maschinenlesbaren Datenträger, in dem zumindest für die Konfiguration des Steuergeräts verwendbare Daten hinterlegt sind, ausgestattet ist. Zum Konfigurieren des Steuergeräts wird dieser Datenträger ausgelesen und die darin hinterlegten Daten werden an das Steuergerät übermittelt. Die an das Steuergerät übermittelten Daten werden im Steuergerät zu dessen Konfigurierung genutzt. Gegebenenfalls ist hierbei eine Formatwandlung der Daten erforderlich.

Bevorzugt ist vorgesehen, dass in dem Datenträger alle zum Fahrwerkssystem oder zur Fahrwerkskomponente gehörenden Daten hinterlegt sind, die zum entsprechenden Konfigurieren des Steuergeräts notwendig sind. Außerdem lassen sich im Datenträger ergänzende fahrwerksspezifische Daten und/oder Informationen hinterlegen (z. B. achsen- und bremsenspezifische Daten, wie Federkennlinien und Steifigkeiten), die ausgelesen und an das Steuergerät übermittelt werden können und die dann gezielt für wichtige Anhängerfunktionen und/oder Gesamtzugfunktionen genutzt werden können.

Unter einem Kraftfahrzeug-Anhänger wird ein Fahrzeug bezeichnet, das in der Regel über keinen eigenen vollwertigen Antrieb verfügt und von einem Zugfahrzeug gezogen wird. Ein Kraftfahrzeug-Anhänger im Sinne der Erfindung ist insbesondere ein LKW-Anhänger, worunter auch Sattelauflieger und Sonderanhänger (bspw. vorrangig landwirtschaftlich genutzte Anhänger) fallen. Das Fahrwerk eines Kraftfahrzeug-Anhängers dient der Verbindung des Kraftfahrzeug-Anhängers mit der Fahrbahn. Zum Fahrwerk gehören u. a. die Räder, die Radaufhängungen (insbesondere die Achsen), die Stoßdämpfer, die Lenkung sowie die Betriebs- und die Feststellbremse. Zum Fahrwerk können ferner Zusatzachsen, Schleppachsen, Liftachsen und/oder Lenkachsen, sowie die zu deren Betrieb erforderlichen Komponenten gehören. Dies ist keine abschließende Aufzählung. Unter einem Fahrwerkssystem wird im Sinne der Erfindung der Zusammenschluss mehrerer Einzelkomponenten zu einer insbesondere montagefertigen Baugruppe verstanden.

Unter einem elektronischen Steuergerät (im folgenden nur als Steuergerät bezeichnet) wird im Sinne der Erfindung ein Modul verstanden, das die Betriebszustände des Kraftfahrzeug-Anhängers überwacht (Monitoring) und/oder das wesentliche Funktionen des Kraftfahrzeug-Anhängers steuert bzw. regelt. Ein solches Steuergerät ist insbesondere ein EBS-Steuergerät, dessen Überwachungs- und/oder Steuerfunktionen jedoch nicht auf das elektronische Bremssystem beschränkt sein müssen. Insbesondere ist vorgesehen, dass das Steuergerät des Kraftfahrzeug-Anhängers mit einem Steuergerät des Zugfahrzeugs kommuniziert, wodurch wichtige Gesamtzugfunktionen (z. B. eine optimierte Fahrdynamikregelung oder eine Geschwindigkeitsbegrenzung) ermöglicht werden.

Unter Daten werden im Sinne der Erfindung übertragbare Informationseinheiten verstanden, die zum Konfigurieren eines Steuergeräts herangezogen werden können. Solche Daten können z. B. Kennlinien, Kennfelder, Kennzahlen, Parameter, Werte und dergleichen sein. Die Daten können zu Datensätzen zusammengefasst sein.

Unter einem maschinenlesbaren Datenträger (im folgenden nur als Datenträger bezeichnet) wird ein Informationsträger verstanden, der insbesondere eine Vielzahl von Daten beinhaltet, die maschinell (d. h. nicht manuell) ausgelesen werden können. Ein solcher Datenträger ist insbesondere ein Magnetstreifen, ein Barcode-Label, ein DataMatrix-Code-Label, ein QR-Code-Label, ein holografischer Speicher oder ein RFID-Transponder oder dergleichen.

Das erfindungsgemäße Verfahren ermöglicht, dass der Fahrzeugbauer oder die Werkstatt die zu einem verbauten oder zu verbauenden Fahrwerkssystem bzw. zu einer verbauten oder verbauenden Fahrwerkskomponente gehörenden spezifischen Daten, die in dem Datenträger hinterlegt sind, einfach und fehlerfrei erfassen und an das Steuergerät übermitteln kann, um das Steuergerät entsprechend zu konfigurieren und insbesondere zu parametrieren. (Unter Parametrieren wird das Versehen von Parametern, Platzhaltern und dergleichen mit konkreten Werten verstanden). Hierdurch wird das Konfigurieren gegenüber den aus dem Stand der Technik bekannten Konfigurationsverfahren erheblich vereinfacht. Ferner werden Konfigurationsfehler vermieden.

Während bei den aus dem Stand der Technik bekannten Konfigurationsverfahren nur ein begrenzter Umfang der potentiell zu einem Fahrwerkssystem oder einer Fahrwerkskomponente zur Verfügung stehenden Daten für die Konfiguration des Steuergeräts genutzt wird, um den Konfigurationsaufwand vertretbar zu halten, können bei dem erfindungsgemäßen Verfahren wesentlich mehr Daten für die Konfiguration herangezogen werden. Somit können ungenutzte Potentiale für eine optimale Steuerung des Kraftfahrzeug-Anhängers und/oder des Gesamtzugs erschlossen werden.

Ferner kann erreicht werden, dass beim Konfigurieren und insbesondere Parametrieren des Steuergeräts die Zulassungskonformität des Kraftfahrzeug-Anhängers erhalten bleibt und/oder wichtige Vorgaben des Anbieters des betreffenden Fahrwerkssystems oder der betreffenden Fahrwerkskomponente nicht unterlaufen werden, wodurch z. B. Manipulationen und/oder Konfigurationsfehler ausgeschlossen werden können.

Das erfindungsgemäße Verfahren ist im Übrigen nicht auf das Konfigurieren von Steuergeräten für Kraftfahrzeug-Anhänger beschränkt. Ebenso lässt sich das erfindungsgemäße Verfahren auch beim Konfigurieren von Fahrzeug-Steuergeräten jeglicher Art, wie insbesondere LKW-Steuergeräten oder Omnibus-Steuergeräten, verwenden.

Bevorzugt ist vorgesehen, dass das Auslesen des Datenträgers manuell erfolgt, wozu insbesondere eine entsprechende Hardware vorgesehen ist. Bspw. kann der Fahrzeugbauer oder die Werkstatt mittels eines handgeführten Scanners oder Lesegeräts den Datenträger auslesen und die hierbei enthaltenen Daten über eine herzustellende Datenverbindung an das Steuergerät übermitteln.

Ebenso ist bevorzugt vorgesehen, dass das Auslesen des Datenträgers automatisch erfolgt. Bspw. kann vorgesehen sein, dass der Datenträger als RFID-Transponder ausgebildet ist und das Steuergerät mit einem korrespondierenden Lesegerät gekoppelt ist. Die Kommunikationsverbindung kann automatisch oder manuell hergestellt werden.
Bevorzugt sind in dem Datenträger ferner Informationen zum Ausstattungsumfang des betreffenden Fahrwerkssystems oder der betreffenden Fahrwerkskomponente hinterlegt (z. B. mit/ohne Verschleißsensierung, mit/ohne Reifendruckkontrolle, etc.), die gleichfalls an das Steuergerät übermittelt werden und dort z. B. in die Überwachungs-Funktionen (Monitoring-Funktionen) aufgenommen werden können, was insbesondere automatisch erfolgt. Unter Informationen werden über bloße Daten hinausgehende Angaben verstanden.

Ferner kann vorgesehen sein, dass in dem Datenträger auch Bedieninformationen, Wartungsinformationen und/oder Serviceinformationen zum betreffenden Fahrwerkssystem oder zur betreffenden Fahrwerkskomponente hinterlegt sind, die gleichfalls an das Steuergerät übermittelt werden. Damit ist es z. B. möglich, eine anhängerspezifische Diagnose durchzuführen und gezielt Handlungsempfehlungen zu geben und/oder Wartungs- und Service-Abläufe zu generieren. Ebenso kann vorgesehen sein, dass auch (insbesondere zulassungsrelevante) Prüfprotokolldaten des betreffenden Fahrwerkssystems oder der betreffenden Fahrwerkskomponente im Datenträger hinterlegt sind, die gleichfalls an das Steuergerät übermittelt werden.

Gemäß einer besonders bevorzugten Weiterbildung ist eine Rückübermittlung vom Steuergerät zum Datenträger eines Fahrwerkssystems oder einer Fahrwerkskomponente vorgesehen, um gezielt Informationen und/oder Daten aus dem Steuergerät in dem Datenträger zu hinterlegen. Dies ist z. B. dann vorteilhaft, wenn im Reklamationsfall das Fahrwerkssystem oder die Fahrwerkskomponente an den Anbieter (Hersteller) zur Fehlerdiagnose zurückgeschickt werden soll.

Das erfindungsgemäße Fahrwerkssystem und die erfindungsgemäße Fahrwerkskomponente sind dadurch gekennzeichnet, dass dieses bzw. diese wenigstens einen maschinenlesbaren Datenträger aufweist, in dem für die Konfiguration eines Steuergeräts des Kraftfahrzeug-Anhängers verwendbare Daten hinterlegt sind.

Zweckmäßigerweise ist der Datenträger derart ausgebildet, dass er zum Konfigurieren des Steuergeräts auslesbar ist, und dass vom Steuergerät rückübermittelte Daten und/oder Informationen im Datenträger hinterlegbar sind. Der Datenträger weist hierfür vorzugsweise auslesbare Mittel (wie IC-Chips) auf, aus dem Daten ausgelesen werden können. Die Daten können Konfigurationsdaten für das Steuergerät sein. Die vom Steuergerät rückübermittelten Daten können in einem volatilen oder nicht volatilen Speicher (bspw. ROM oder RAM, ... ) des Datenträgers hinterlegt werden.

Der erfindungsgemäße Kraftfahrzeug-Anhänger ist dadurch gekennzeichnet, dass dieser wenigstens ein erfindungsgemäßes Fahrwerkssystem und/oder wenigstens eine erfindungsgemäße Fahrwerkskomponente aufweist. Insbesondere ist vorgesehen, dass dieser auch wenigstens ein Steuergerät aufweist, das nach dem erfindungsgemäßen Verfahren konfigurierbar ist. Bevorzugt ist das Steuergerät mit einer entsprechenden Schnittstelle ausgebildet.

Die Erfindung wird nachfolgend anhand der Figuren beispielhaft näher erläutert. Es zeigen schematisch:
- Fig. 1: einen erfindungsgemäßen Kraftfahrzeug-Anhänger in einer Seitenansicht; und
- Fig. 2: ein Fahrwerkssystem des Kraftfahrzeug-Anhängers der Fig. 1 in einer perspektivischen Ansicht.

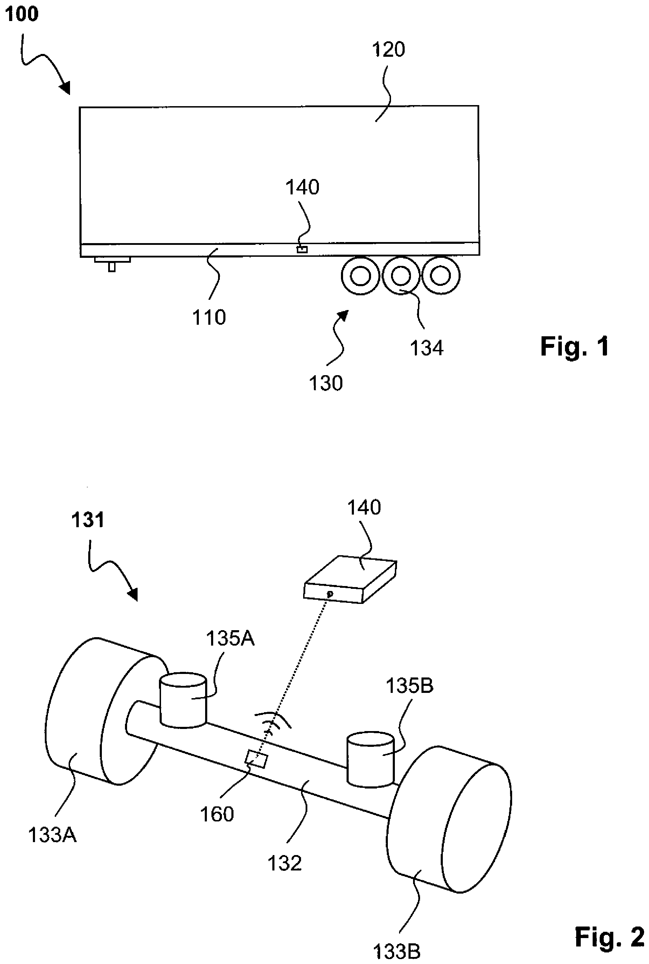

Fig. 1 zeigt einen Kraftfahrzeug-Anhänger 100, wobei es sich beispielhaft um einen LKW-Auflieger handelt. Der Kraftfahrzeug-Anhänger 100 weist einen von einem Rahmen 110 getragenen Aufbau 120 auf, sowie ein mit dem Rahmen 110 verbundenes Fahrwerk 130. Zum Fahrwerk 130 gehören u. a. die Räder 134, die Radaufhängungen (Achsen), die Stoßdämpfer, die Betriebs- und die Feststellbremse.

Mit 140 ist ein am Rahmen 110 befestigtes Steuergerät (ECU) des Kraftfahrzeug-Anhängers 100 bezeichnet, das die Betriebszustände des Kraftfahrzeug-Anhängers 100 überwacht und/oder wesentliche Funktionen des Kraftfahrzeug-Anhängers 100 und insbesondere des Fahrwerks 130 steuert. Ein solches Steuergerät ist z. B. ein EBS-Steuergerät.

Beim Einbau oder beim Austausch von Fahrwerkssystemen und/oder Fahrwerkskomponenten muss das Steuergerät 140 mit entsprechenden, d. h. zum verbauten (bzw. zu verbauenden) Fahrwerkssystem oder zur verbauten (bzw. zu verbauenden) Fahrwerkskomponente gehörenden Daten konfiguriert werden, was nachfolgend im Zusammenhang mit der Fig. 2 erläutert wird.

Fig. 2 zeigt ein insgesamt mit 131 bezeichnetes Fahrwerkssystem, das eine Achse 132 mit daran befestigten Trommelbremsen 133A und 133B (für die Betriebsbremse), sowie zwei Luftfedereinheiten 135A und 135B umfasst. Es versteht sich, dass auch andere Bremsen, bspw. Scheibenbremsen, vorgesehen werden können. Erfindungsgemäß ist vorgesehen, dass an der Baugruppe 131 wenigstens ein Datenträger 160 angebracht ist, in dem zumindest die für den Betrieb des Fahrwerkssystems 131 relevanten Daten hinterlegt sind, die für die Konfiguration des Steuergeräts 140 benötigt werden. Ferner können im Datenträger 160 ergänzende Daten und/oder Informationen hinterlegt sein, wie obenstehend erläutert.

Der Datenträger 160 ist beispielhaft direkt auf der Achse 132 angebracht, bspw. angeklebt. Der Datenträger 160 kann mit einem Beschädigungsschutz versehen sein. Ebenso kann vorgesehen sein, dass der Datenträger 160 von außen nicht sichtbar in die Achse 132 integriert ist.

Um das Steuergerät 140 des Kraftfahrzeug-Anhängers 100 zu konfigurieren, wird der Datenträger 160 ausgelesen und die beinhalteten Daten werden zur Konfiguration an das Steuergerät 140 übermittelt, wozu das Steuergerät 140 mit einer entsprechenden Schnittstelle ausgebildet ist. In dem gezeigten Beispiel ist der Datenträger 160 als RFID-Transponder ausgebildet und das Steuergerät 140 ist mit einem integrierten Lesegerät ausgebildet. Das Auslesen des Datenträgers 160 und das Übermitteln der ausgelesenen Daten an das Steuergerät 140 kann somit weitgehend automatisch und kabellos erfolgen. Alternativ kann ein Datenträger 160 z. B. auch mittels eines Scanners oder dergleichen ausgelesen werden, wie obenstehend erläutert. Ein solcher Scanner ist insbesondere ein handgeführter Scanner, der z. B. mit einem Computer verbunden ist, welcher über entsprechende Pogramme verfügt.

Mit dem vorgeschlagenen Verfahren kann das Steuergerät 140 unabhängig von etwaigen Steuer-Verbindungen mit dem Fahrwerkssystem 131 oder einzelnen Fahrwerkskomponenten konfiguriert werden. Ferner kann das Steuergerät 140 mit Daten von Fahrwerkssystemen und/oder Fahrwerkskomponenten konfiguriert werden, die nicht mit dem Steuergerät 140 verbunden sind.

### Bezugszeichenliste

- 100: Kraftfahrzeug-Anhänger
- 110: Rahmen
- 120: Aufbau
- 130: Fahrwerk
- 131: Fahrwerksystem
- 132: Achse
- 133A: Trommelbremse
- 133B: Trommelbremse
- 134: Räder
- 135A: Luftfedereinheit
- 135B: Luftfedereinheit
- 140: Steuergerät (des Kraftfahrzeug-Anhängers)

## Patentansprüche

1. Verfahren zum Konfigurieren eines elektronischen Steuergeräts (140) eines Kraftfahrzeug-Anhängers (100) unter Verwendung von spezifischen Daten für die am Kraftfahrzeug-Anhänger verbauten Fahrwerkssysteme und/oder Fahrwerkskomponenten,
wobei wenigstens ein Fahrwerkssystem (131) und/oder wenigstens eine Fahrwerkskomponente mit wenigstens einem maschinenlesbaren Datenträger (160), in dem für die Konfiguration des Steuergeräts (140) verwendbare Daten hinterlegt sind, ausgestattet ist und
wobei zum Konfigurieren des Steuergeräts (140) dieser Datenträger (160) ausgelesen wird und die darin hinterlegten Daten an das Steuergerät (140) übermittelt werden,
**dadurch gekennzeichnet, dass**
eine Rückübermittlung vom Steuergerät (140) zum Datenträger (160) vorgesehen ist, um gezielt Daten und/oder Informationen aus dem Steuergerät (140) in dem Datenträger (160) zu hinterlegen, und
dass das Steuergerät (140) mit einem Steuergerät eines Zugfahrzeugs kommuniziert.

2. Verfahren nach Anspruch 1, wobei das Auslesen des Datenträgers (160) manuell erfolgt.

3. Verfahren nach Anspruch 1, wobei das Auslesen des Datenträgers (160) automatisch erfolgt.

4. Verfahren nach einem der vorausgehenden Ansprüche, wobei in dem Datenträger (160) ferner Informationen zum Ausstattungsumfang des Fahrwerksystems (131) oder der Fahrwerkskomponente hinterlegt sind, die gleichfalls an das Steuergerät (140) übermittelt werden.

5. Verfahren nach einem der vorausgehenden Ansprüche, wobei in dem Datenträger (160) ferner Bedien-, Wartungs- und/oder Serviceinformationen zum Fahrwerkssystem (131) oder zur Fahrwerkskomponente hinterlegt sind, die gleichfalls an das Steuergerät (140) übermittelt werden.

6. Verfahren nach einem der vorausgehenden Ansprüche, wobei in dem Datenträger (160) ferner Prüfprotokolldaten zum Fahrwerkssystem (131) oder zur Fahrwerkskomponente hinterlegt sind, die gleichfalls an das Steuergerät (140) übermittelt werden.

7. Radaufhängung, insbesondere eine Achse, für einen Kraftfahrzeug-Anhänger (100), wie Nutzfahrzeuganhänger, umfassend wenigstens einen maschinenlesbaren Datenträger (160), in dem für die Konfiguration eines Steuergeräts (140) des Kraftfahrzeug-Anhängers (100) verwendbare Daten hinterlegt sind,
**dadurch gekennzeichnet, dass**
der Datenträger (160) derart ausgebildet ist, dass er zum Konfigurieren des Steuergeräts (140) auslesbar ist, und dass vom Steuergerät (140) rückübermittelte Daten und/oder Informationen in ihm hinterlegbar sind.

8. Radaufhängung nach Anspruch 7, wobei der Datenträger (160) als ein Magnetstreifen, ein Barcode-Label, ein DataMatrix-Code-Label, ein QR-Code-Label, ein holografischer Speicher und/oder ein RFID-Transponder ausgebildet ist.

9. Kraftfahrzeug-Anhänger (100), insbesondere LKW-Anhänger oder Sattelauflieger, wobei dieser wenigstens eine Radaufhängung gemäß Anspruch 7 oder 8 aufweist, sowie insbesondere auch wenigstens ein Steuergerät (140), das nach einem Verfahren gemäß einem der Ansprüche 1 bis 6 konfigurierbar ist.

## Claims

1. A method of configuring an electronic control unit (140) of a motor vehicle trailer (100) by using specific data related to a chassis system and/or a chassis component installed in the motor vehicle trailer, wherein at least the chassis system (131) and/or at least one chassis component comprise at least one machine readable data carrier (160), in which the configuration for the electronic control unit (140) usable data is stored and
wherein to configure the electronic control unit (140) the data carrier is readout and the therein stored data is transmitted to the electronic control unit,
**characterized in that**,
a return transmission from the electronic control unit (140) to the data carrier is foreseen, for storing specific data and/or information out of the electronic control unit (140) into the data carrier (160) and that the electronic control unit (140) communicates with an electronic control unit (140) of a drawing vehicle.

2. The method of claim 1, wherein the reading out of the data carrier (160) occurs manually.

3. The method of claim 1, wherein the reading out of the data carrier (160) occurs automatically.

4. A method according to one of the preceding claims, wherein the data carrier (160) stores furthermore information related to the scope of equipment of the chassis system (131) or the chassis component, said information is transferred to the electronic control unit (140).

5. A method according to one of the preceding claims, wherein the data carrier (160) stores furthermore data related to the operation, maintenance and/or service information of the chassis system (131) or relating to the chassis component, said data is transferred likewise to the electronic control unit (140).

6. A method according to one of the preceding claims, wherein the data carrier (160) stores data related to an inspection sheet associated with the chassis system (131) or the chassis component, said data is transferred likewise to the electronic control unit (140).

7. Wheel suspension, in particular an axle, for a motor vehicle trailer (100), like a utility vehicle trailer, comprising
at least one machine readable data carrier (160), in which is stored for the configuration of an electronic control unit (140) of the motor vehicle trailer usable data,
**characterized in that**,
the data carrier (160) is designed in such a way, that it is readable for configuring the electronic control unit (140) and that from the electronic control unit (140) returned data and/or information is storable in said data carrier (160).

8. Wheel suspension of claim 7, wherein the data carrier (160) is designed as a magnetic strip, a bar-code label, a Data Matrix code label, a QR Code label, a holographic memory and/or a RFID transponder.

9. Motor vehicle trailer (100), in particular a truck trailer or semi-trailer, wherein it comprises at least one wheel suspension of claim 7 or 8, as well as in particular at least one electronic control unit, which is configurable corresponding to a method of claim 1 to 6.

## Revendications

1. Procédé de configuration d'un appareil de commande électronique (140) d'une remorque de véhicule automobile (100) en utilisant des données spécifiques pour les systèmes de train de roulement et/ou les composants de train de roulement montés dans la remorque de véhicule automobile,
dans lequel au moins un système de train de roulement (131) et/ou au moins un composant de train de roulement est équipé d'au moins un support de données (160) lisible à la machine, dans lequel sont stockées des données utilisables pour la configuration de l'appareil de commande (140)
et dans lequel, en vue de configurer l'appareil de commande (140), ce support de données (160) est lu et les données stockées dans celui-ci sont transmises à l'appareil de commande (140),
**caractérisé en ce que**
il est prévu une transmission en retour de l'appareil de commande (140) vers le support de données (160), afin de stocker de façon ciblée dans le support de données (160) des données et/ou des informations provenant de l'appareil de commande (140),
et **en ce que** l'appareil de commande (140) communique avec un appareil de commande d'un véhicule tracteur.

2. Procédé selon la revendication 1, dans lequel la lecture du support de données (160) s'effectue par voie manuelle.

3. Procédé selon la revendication 1, dans lequel la lecture du support de données (160) s'effectue par voie automatique.

4. Procédé selon l'une des revendications précédentes, dans lequel des informations relatives aux équipements du système de train de roulement (131) ou des composants de train de roulement sont en outre stockées dans le support de données (160), qui sont également transmises à l'appareil de commande (140).

5. Procédé selon l'une des revendications précédentes, dans lequel des informations de manoeuvre, d'entretien et/ou de service relatives au système de train de roulement (131) ou au composant de train de roulement sont en outre stockées dans le support de données (160) qui sont également transmises à l'appareil de commande (140).

6. Procédé selon l'une des revendications précédentes, dans lequel des données de rapport de contrôle relatives au système de train de roulement (131) ou au composant de train de roulement sont en outre stockées dans le support de données (160) qui sont également transmises à l'appareil de commande (140).

7. Suspension de roue, en particulier essieu pour une remorque de véhicule automobile (100), telle qu'une remorque de véhicule utilitaire, comportant au moins un support de données (160) lisible à la machine, dans lequel sont stockées des données utilisables pour la configuration de l'appareil de commande (140) de la remorque de véhicule automobile (100),
**caractérisée en ce que**
le support de données (160) est réalisé de manière à pouvoir être lu pour la configuration de l'appareil de commande (140) et **en ce que** des données et/ou des informations retransmises en retour de l'appareil de commande (140) sont susceptibles d'être stockées dans ledit support.

8. Suspension de roue selon la revendication 7, dans laquelle le support de données (160) est réalisé sous la forme d'une bande magnétique, d'une étiquette de code à barres, d'une étiquette de code Datamatrix, d'une étiquette de code QR, d'une mémoire holographique et/ou d'un transpondeur RFID.

9. Remorque de véhicule automobile (100), en particulier remorque de poids lourd ou semi-remorque, celle-ci comprenant au moins une suspension de roue selon la revendication 7 ou 8, ainsi qu'en particulier également au moins un appareil de commande (140) susceptible d'être configuré par un procédé selon l'une des revendications 1 à 6.
